# EUROPÄISCHE PATENTSCHRIFT

(11) **EP 1 126 632 B1**
(45) Veröffentlichungstag und Bekanntmachung des Hinweises auf die Patenterteilung: **14.04.2004**
(21) Anmeldenummer: 01101944.5
(22) Anmeldetag: 29.01.2001
(51) Int. Cl.: H04B 7/08, H04N 5/44

(54) **Empfangseinrichtung**
Receiving device
Dispositif de réception

(30) Priorität: 16.02.2000 DE 10006701
(43) Veröffentlichungstag der Anmeldung: 22.08.2001
(73) Patentinhaber: Harman Becker Automotive Systems GmbH, 76307 Karlsbad (DE)
(72) Erfinder: Zahm, Michael, 76337 Waldborn (DE); Köhler, Stefan, 75210 Keltern (DE); Geiger, Erich A. Dr., 75236 Kämpfelbach (DE); Link, Hermann, 78166 Donaueschingen (DE)
(74) Vertreter: Patentanwälte Westphal, Mussgnug & Partner

(56) Entgegenhaltungen:
- EP-A- 0 527 445
- DE-A- 19 739 898
- DE-A- 19 743 124
- DE-U- 29 911 085
- US-A- 5 056 153

## Beschreibung

Die Erfindung betrifft eine Empfangseinrichtung insbesondere für mobile Anwendungen.

Bei mobilem Einsatz von Empfangseinrichtungen wie beispielsweise von Radio- und Fernsehempfängern in Kraftfahrzeugen tritt das Problem auf, dass sich durch die Fortbewegung des Fahrzeuges die Senderlandschaft fortlaufend verändert. Dies kann dazu führen, dass ein Sender auf der gerade eingestellten Frequenz nicht mehr empfangen werden kann. Meist steht der Sender jedoch zumindest auf einer weiteren Frequenz zur Verfügung, so dass durch (bevorzugt automatisches) Umschalten der Empfangseinrichtung auf dieser Frequenz der Sender weiter gehört und gesehen werden kann. Um jedoch ein Umschalten auf eine alternative Frequenz im allgemeinen und ein schnelles Umschalten im besonderen zu ermöglichen, muss die alternative Frequenz möglichst schnell und umfassend ausfindig gemacht werden.

Aufgabe der Erfindung ist es, eine Empfangseinrichtung anzugeben bei der ein schnelles und sicheres Auffinden alternativer Frequenzen eines Senders möglich ist.

Die Aufgabe wird gelöst durch eine Empfangseinrichtung gemäss Patentanspruch 1. Ausgestaltungen und Weiterbildungen sind Gegenstand von Unteransprüchen.

Die Erfindung zeichnet sich durch eine hohe Geschwindigkeit bei der Sendersuche im allgemeinen und bei der Suche nach alternativen Sendern im besonderen aus. Durch ein sehr schnelles und vollständiges Erfassen der aktuellen Senderlandschaft wird eine Diversity-Funktionalität ohne Signalbeeinflussung und eine vorausschauende Alternativenauswahl ermöglicht.

Erreicht wird dies insbesondere durch eine Empfangseinrichtung mit mindestens zwei Fernseh-Kanalwähleinrichtungen zum Umsetzen von Hochfrequenzsignalen in Zwischenfrequenzsignale, also mindestens zwei sogenannte TV-Tuner, die Frequenzen in dem gesamten für den Fernsehempfang vorgesehenen Frequenzband beziehungsweise in den dafür vorgesehenen Frequenzbändern empfangen und in eine bevorzugt feste Zwischenfrequenz umsetzen. Weiterhin umfasst die erfindungsgemässe Empfangseinrichtung mindestens zwei Audio-Demodulationseinrichtungen zum Umsetzen von Zwischenfrequenzsignalen in Tonsignale und mindestens zwei Video-Demodulationseinrichtungen zum Umsetzen von Zwischenfrequenz-Signalen in Bildsignale. Mittels einer Zwischenfrequenz-Schalteinrichtung werden die Audio- und Video-Demodulationseinrichtungen auf die Fernseh-Kanalwäleinrichtungen aufgeschaltet.

Die Empfangseinrichtung ist bevorzugt mit mindestens zwei Empfangsantennen zur Bereitstellung von Hochfrequenzsignalen und einer Hochfrequenz-Schalteinrichtung zum Aufschalten der Empfangsantennen auf die Fernseh-Kanalwähleinrichtungen ausgestattet. Somit können die Fernseh-Kanalwähleinrichtungen unabhängig voneinander auf mehrere Empfangsantennen zugreifen, so dass vorteilhafterweise auch die Empfangsantenne mit den günstigeren Emfangseigenschaften (z.B. bessere Position am Fahrzeug) im Hinblick auf den gewünschten Sender ausgewählt werden kann.

An die Ausgänge der Video-Demodulationseinrichtungen können eine Video-Korrelationseinrichtung sowie eine Label-Korrelationseinrichtung angeschlossen sein. Damit lässt sich mit geringem Aufwand eine zuverlässige Sendererkennung und folglich die Erkennung zweier identischer Sender auf verschiedenen Frequenzen realisieren. Entsprechend kann auch eine Audio-Korrelationseinrichtung vorgesehen werden, die an die Ausgänge der Audio-Demodulationseinrichtungen angeschlossen ist.

Während die Video-Demodulationseinrichtungen beispielsweise durch konventionelle Video-Zwischenfrequenzstufen mit den in der Fernsehtechnik üblichen Trägerfrequenzen und Filterkurven ausgebildet sein können, beruhen die Audio-Demodulationseinrichtungen hingegen bevorzugt nicht auf den sonst üblichen Prinzipien, den Tonträger durch Mischung in eine bestimmte Frequenzlage mit anschliessender bandbegrenzender Filterung zu selektieren oder ein diskretes Filter so umzuschalten, dass die zu demodulierende Tonträgerfrequenz in den Durchlassbereich des Filters fällt.

Vielmehr weist bei einer Weiterbildung der erfindungsgemässen Empfangseinrichtung die Audio-Demodulationseinrichtung einen Phasenregelkreis sowie mindestens ein mit dem Phasenregelkreis mitlaufendes Filter zur Selektion und Spiegelfrequenzunterdrückung auf. Die Audio-Demodulationseinrichtung kann dabei zusätzlich einen Feldstärkedetektor und/oder einen Qualitätsdetektor aufweisen. Damit können Trägersignale im ungefilterten Zwischenfrequenz-Signalgemisch am Ausgang der jeweiligen Fernseh-Kanalwähleinrichtung demoduliert und/oder deren Amplitude und/oder Qualität bestimmt werden. Es handelt sich somit um eine Art FM/AM-Radio (FM = Frequenzmodulation, AM = Amplitudenmodulation), das über den gesamten auswertbaren Zwischenfrequenzbereich der Fernseh-Kanalwähleinrichtungen abstimmbar ist und das ohne irgendeine durch Festfilter oder umschaltbare Festfilter bedingte Kanalselektion an die Fernseh-Kanalwähleinrichtungen angeschlossen ist.

Damit ist es nun beispielsweise möglich, Trägerfrequenzen von benachbarten Kanälen nach Pegel und/oder Informationsgehalt auszuwerten. Nachbarkanäle können zwar prinzipiell durch die Selektionskurve der Fernseh-Kanalwähleinrichtungen in der Amplitude gedämpft sein, eine Auswertung ist aber trotzdem in der Regel möglich. Dadurch kann aber vorteilhafterweise die Audio-Demodulationseinrichtung mit einem Einstellvorgang der TV-Tuner drei Fernseh-Kanäle abtasten (K-1, K, K+1). Bei den meisten Suchlaufarten verdreifacht sich dadurch die Suchgeschwindigkeit.

Die Detektion und Bewertung von Trägerfrequenzen unmittelbar benachbarter Kanäle kann weiterhin dazu genutzt werden, um Bild- und/oder Ton-Signalbeeinflussungen im Nutzkanal durch die Nachbarkanäle zu reduzieren. Hierzu bieten sich beispielsweise eine Reduzierung der Eingangsverstärkung der jeweiligen Fernseh-Kanalwähleinrichtung sowie die Feinabstimmung (Detuning) oder Änderung von Filterbandbreiten an.

Um verschiedene Betriebsmodi (z. B. Suchlauf, Nachbarkanalunterdrückung, Alternativsender-Erkennung, abhängig von bestimmten Parametern zu erlauben, kann die Empfangseinrichtung mit zusätzlich einer Auswerteeinrichtung zur Auswertung von Ausgangssignalen der Audio-Korrelationseinrichtung und/oder der Video-Korrelationseinrichtung und/oder der Label-Korrelationseinrichtung und/ oder des Feldstärkedetektors und/oder des Qualitätsdetektors ausgestattet werden. Die Auswerteeinrichtung steuert dabei bevorzugt die Hochfrequenz-Schalteinrichtung und/oder die Niederfrequenz-Schalteinrichtung entsprechend den von ihr intern erzeugten und gegebenenfalls zusätzlichen extern eingegebenen Parametern. So steuert bevorzugt die Auswerteeinrichtung die Hochfrequenz-Schalteinrichtung und/oder die Niederfrequenz-Schalteinrichtung gemäss einem (von extern) wählbaren Betriebsmodussignal in Abhängigkeit von den Ausgangssignalen der Audio-Korrelationseinrichtung und/oder der Video-Korrelationseinrichtung und/oder der Label-Korrelations-einrichtung und/ oder des Feldstärkedetektors und/oder des Qualitätsdetektors.

Die Erfindung wird nachfolgend anhand des in den Figuren der Zeichnung dargestellten Ausführungsbeispiels näher erläuter. Es zeigt:
- Figur 1: ein allgemeines Ausführungsform einer erfindungsgemässen Empfangseinrichtung und
- Figur 2: eine bevorzugte Ausführungsform einer Audio-Demodulationseinrichtung für eine Empfangseinrichtung nach Figur 1.

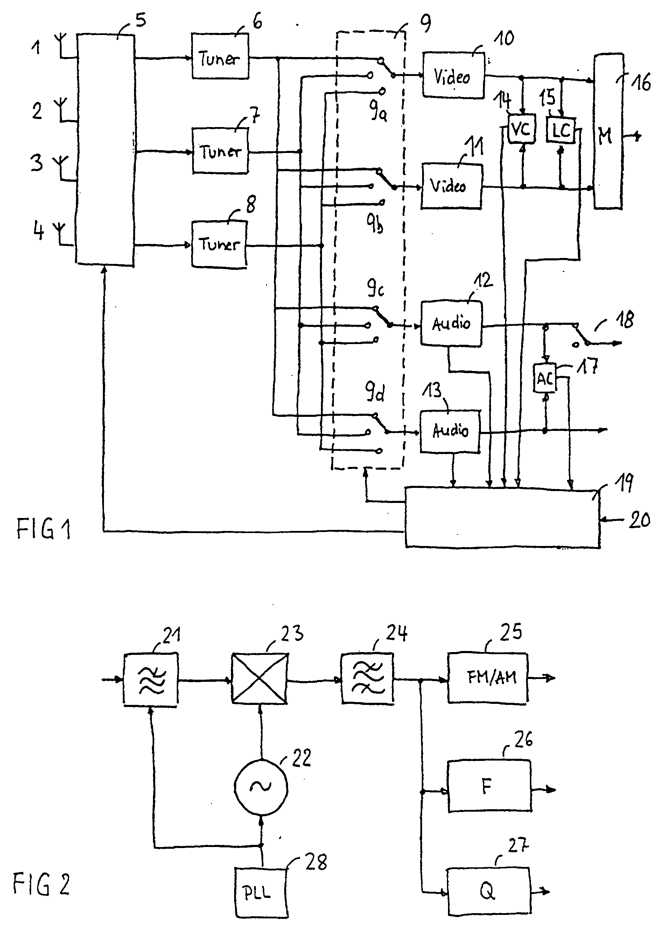

Bei dem in Figur 1 gezeigten Ausführungsbeispiel sind vier Empfangsantennen 1 bis 4, die beispielsweise an vier verschiedenen Positionen an einem Kraftfahrzeug angebracht sind, an eine Hochfrequenz-Schalteinrichtung 5 angeschlossen. Die Hochfrequenz-Schalteinrichtung 5 schaltet dabei drei Fernseh-Kanalwähleinrichtungen 6, 7 und 8 auf jeweils eine der Empfangsantennen 1 bis 4 auf, wobei eine Empfangsantenne gegebenenfalls auch mit zwei oder sogar drei Kanalwähleinrichtungen 6, 7 und 8 gekoppelt werden kann. Die Kanalwähleinrichtungen 6, 7 und 8 weisen jeweils beispielsweise einen in der Zeichnung nicht dargestellten Mischer auf, der das hochfrequente Signal von der jeweils aufgeschalteten Empfangsantenne 1 bis 4 durch Mischung mit einem Mischsignal in ein Zwischenfrequenzsignal umsetzt.

Den Kanalwähleinrichtungen 6, 7 und 8 ist eine Zwischenfrequenz-Schalteinrichtung 9 mit beispielsweise vier einzelnen Schaltern 9a, 9b, 9c, 9d nachgeschaltet, an die wiederum zwei Video-Demodulationseinrichtungen 10 und 11 sowie zwei Audio-Demodulationseinrichtungen 12 und 13 angeschlossen sind. Dabei kann jede einzelne der Video-Demodulationseinrichtungen 10, 11 und der Audio-Demodulationseinrichtungen 12 und 13 je nach Anwendung in bestimmter Weise und in verschiedenen Kombinationen auf eine der Kanalwähleinrichtungen 6, 7 und 8 aufgeschaltet werden. Die Video-Demodulationseinrichtungen 10, 11 sind konventionelle Video-Zwischenfrequenzstufen mit den in der Fernsehtechnik üblichen Trägerfrequenzen und Filterkurven. Die Filter werden beispielsweise mittels Oberflächenwellenfilter (OFW) realisiert. Die Audio-Demodulationseinrichtungen 12 und 13 sind in besonderer Weise ausgebildet und werden im einzelnen in Figur 2 näher erläutert.

Zwischen die Ausgänge der beiden Video-Demodulationseinrichtungen 10 und 11 ist eine Video-Korrelationseinrichtung 14 sowie eine Label-Korrelationseinrichtung 15 geschaltet, die die Ausgänge der beiden Video-Demodulationseinrichtungen 10 und 11 auf Übereinstimmung der Ausgangssignale beziehungsweise der Senderkennzeichen (Labels) hin vergleicht. Des weiteren ist den Ausgängen der beiden Video-Demodulationseinrichtungen 10 und 11 ein Bildspeicher 16 zur Speicherung und gegebenenfalls Bildaufbereitung nachgeschaltet, dessen Inhalt zur weiteren Verarbeitung an andere, in der Zeichnung nicht gezeigte Einheiten übertragen wird.

Zwischen die Ausgänge der beiden Audio-Demodulationseinrichtungen 12 und 13 ist eine Audio-Korrelationseinheit 17 geschaltet, die die Ausgänge der beiden Audio-Demodulationseinrichtungen 12 und 13 auf Übereinstimmung der Ausgangssignale hin überwacht. Den Ausgängen der Audio-Demodulationseinrichtungen 12 und 13 schliesst sich ein Auswahlschalter 18 an, mit Hilfe dessen einer der Ausgänge auf nachfolgende, in der Zeichnung nicht gezeigte Einheiten (z. B. Dekoder, Niederfrequenzversrtärker etc.) aufgeschaltet werden kann. Ausserdem kann - wie beim Ausführungsbeispiel gezeigt - einer der Ausgänge fest mit in der Zeichnung nicht dargestellten Einheiten verbunden sein.

Schliesslich ist eine Auswerteeinrichtung 19 vorgesehen, die Ausgangssignale von der Audio-Korrelationseinrichtung 17, der Video-Korrelationseinrichtung 14, der Label-Korrelationseinrichtung 15 sowie von den Audio-Demodulationseinrichtungen 12 und 13 erhält und ausserdem durch ein externes Betriebsmodusauswahlsignal 20 angesteuert wird. Die Auswerteeinrichtung 19 erzeugt daraus Steuersignale zur Steuerung der Hochfrequenz-Schalteinrichtung 5 und Zwischenfrequenz-Schalteinrichtung 9.

Die Audio-Demodulationseinrichtungen 12 und 13 weisen entsprechend Figur 2 unter anderem jeweils ein steuerbares Selektionsfilter 21 (z. B Tiefpass oder Bandpass), eine diesem nachgeschaltete und zudem eine durch einen steuerbaren Oszillator 22 gespeiste Mischstufe 23, ein dieser wiederum nachfolgendes Bandpassfilter 24 zur Bandbegrenzung sowie daran anschliessend eine Demodulatorstufe 25 zur Frequenz- und Amplitudendemodulation auf. An den Ausgang des Bandpassfilters 24 können zudem ein Feldstärkedetektor 26 und ein Qualitätsdetektor 27 angeschlossen sein, die entsprechende Signale für die Auswerteeinrichtung 19 bereit stellen. Die Steuerung des Selektionsfilters 21 und des Oszillators 22 erfolgt durch einen Phasenregelkreis 28 derart, dass Selektionsfilter 21 und Oszillator 22 beispielsweise mit dem Oszillator des Phasenregelkreises 28 "mitgezogen" werden.

Durch Eingabe eines entsprechenden Betriebsmodusauswahlsignal 20 können zum Beispiel die folgenden Betriebsmodi einzeln oder in Kombination miteinander ausgewählt werden:
1. Die Audio-Demodulationseinrichtung 12, 13 kann auf einen in einem Zwischenfrequenzsignal vorhandenen zweiten Tonträger, der zur Übertragung einer zweiten Toninformation genutzt wird, abgestimmt werden. Damit ist die Möglichkeit gegeben, Stereo- und Zweikanal-Sendungen im entsprechenden Modus wiederzugeben. Vorteilhaft dabei ist, dass nun für jeden Tonträger separate Qualitätsinformationen und Feldstärkeinformationen vorliegen, die einer weiteren Auswertung zugänglich sind. Die zur Aufschaltung der Audio-Demodulationseinrichtungen 12, 13 vorgesehenen Schalter 9c und 9d der Zwischenfrequenz-Schalteinrichtung 9 können dabei entsprechend der nachfolgenden Tabelle 1 geschaltet sein, wobei KWE für Kanalwähleinrichtung steht. 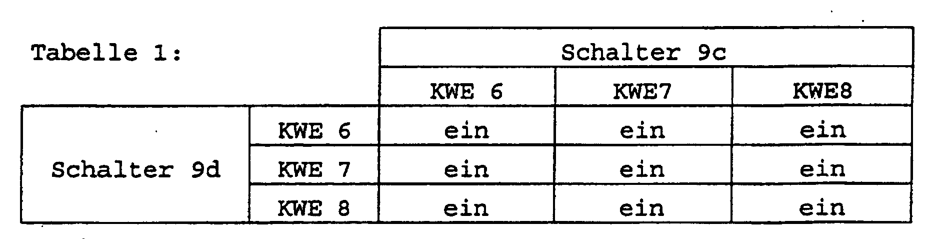
2. Eine Audio-Demodulationseinrichtung 12, 13 kann auf den Ausgang einer anderen Kanalwähleinrichtung 6, 7, 8 aufgeschaltet werden, womit ein Tonkorrelationsverfahren zur Identifizierung gleicher Programminhalte angewendet werden kann. Damit ist ein Entscheidungskriterium für beispielsweise ein Frequenzdiversity-Verfahren gegeben. Die zur Aufschaltung der Audio-Demodulationseinrichtungen 12, 13 vorgesehenen Schalter 9c und 9d der Zwischenfrequenz-Schalteinrichtung 9 können dabei entsprechend der nachfolgenden Tabelle 2 geschaltet sein, wobei wiederum KWE für Kanalwähleinrichtung steht. 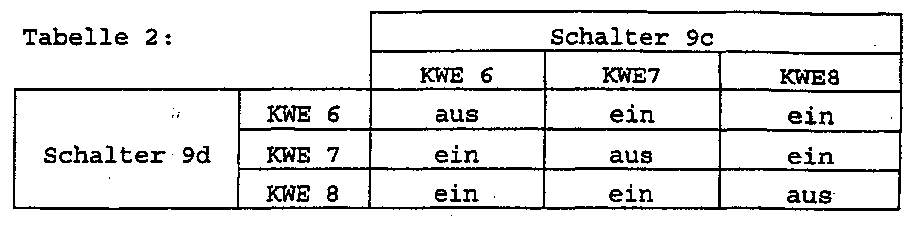
3. Eine Audio-Demodulationseinrichtung 12, 13 kann dazu verwendet werden, die aktuelle Senderlandschaft zu bestimmen, indem zusammen mit der vorgeschalteten Kanalwähleinrichtung 6, 7 oder 8 der Fernseh-Empfangsbereich durchgescannt wird und der Träger mit Frequenz und Pegel erfasst werden. Diese Prozedur kann im Hintergrund ablaufen, d.h. ohne Beeinträchtigung des zur gleichen Zeit eingestellten und dargebotenen Fernsehsenders.
4. Eine Audio-Demodulationseinrichtung 12, 13 kann verwendet werden, um Audio- und/oder Video-Antennenauswahl im Hintergrund zu steuern. Dazu wird mit der vorgeschalteten Kanalwähleinrichtung 6, 7, 8 der aktuelle Kanal eingestellt und die Empfangsantennen nacheinander durchgeschaltet. Für jede Empfangsantenne ist nun eine Feldstärkeaussage für den Bildträger bzw. Tonträger möglich, indem die Audio-Demo-dulationseinrichtung 12, 13 sehr schnell auf die entsprechenden Träger abstimmt und deren Amplituden ausmisst. In Abhängigkeit von den Ergebnissen kann dem Vordergrundkanal direkt die Empfangsantenne mit dem stärksten Pegel aufgeschaltet werden. Dieses Verfahren hat den Vorteil, dass die Auswahl der Empfangsantenne ohne Beeinflussung von Bild- oder Tonsignal im sichtbaren Vordergrundsignal erfolgt.
5. Ein Audio-Demodulationseinrichtung 12, 13 kann natürlich auch dazu verwendet werden, Radiosignale zu demodulieren, d.h. es ist nicht nur Fernsehbild- und Fernsehton-Empfang möglich, sondern auch Radioempfang. Zum Radioempfang wird die vorgeschaltete Kanalwähleinrichtung 6, 7 oder 8 so abgestimmt, daß ihr Zwischenfrequenz-Ausgangssignal Radioträger enthält, die dann von der Audio-Demodulationseinrichtung 12 und/oder 13 demoduliert werden.
6. Es ist zum Beispiel auch möglich Trägerfrequenzen von benachbarten Kanälen nach Pegel und/oder Informationsgehalt auszuwerten. Nachbarkanäle können zwar prinzipiell durch die Selektionskurve der Kanalwähleinrichtung 6, 7 oder 8 in der Amplitude gedämpft sein. Eine Auswertung ist aber trotzdem in den meisten Fallen möglich. Mit einem Einstellvorgang der Kanalwähleinrichtung 6, 7, 8 kann die Audio-Demodulationseinrichtung 12, 13, die eine wesentlich schnellere Einstellung bietet, drei Fernseh-Kanäle abtasten. Damit kann in bestimmten Suchlaufarten die Suchlaufgeschwindigkeit verdreifacht werden.
7. Die Detektion und Bewertung von Trägerfrequenzen der unmittelbar benachbarten Kanäle kann weiterhin vorteilhaft ausgenutzt werden um Bild- und Ton-Signalbeeinflussung im Nutzkanal durch Nachbarkanäle zu reduzieren, z. B. durch Reduzierung der Eingangsverstärkung der Kanalwähleinrichtungen oder durch Feinabstimmung (Detuning) oder durch Änderung von Filterbandbreiten.

Die Besonderheit der Erfindung besteht also darin, dass mit sehr hoher Geschwindigkeit ein genaues Profil der jeweils aktuellen Senderlandschaft gezeichnet werden kann und davon ausgehend geeignete Massnahmen für den optimalen Empfang in kürzester Zeit getroffen werden können.

### Bezugszeichenliste

- 1: Empfangsantenne
- 2: Empfangsantenne
- 3: Empfangsantenne
- 4: Empfangsantenne
- 5: Hochfrequenz-Schalteinrichtung
- 6: Kanalwähleinrichtung
- 7: Kanalwähleinrichtung
- 8: Kanalwähleinrichtung
- 9: Zwischenfrequenz-Schalteinrichtung
- 9a: Schalter
- 9b: Schalter
- 9c: Schalter
- 9d: Schalter
- 10: Video-Demodulationseinrichtung
- 11: Video-Demodulationseinrichtung
- 12: Audio-Demodulationseinrichtung
- 13: Audio-Demodulationseinrichtung
- 14: Video-Korrelationseinrichtung
- 15: Label-Korrelationseinrichtung
- 16: Bildspeicher
- 17: Audio-Korrelationseinrichtung
- 18: Auswahlschalter
- 19: Auswerteeinrichtung
- 20: Auswahlsignal
- 21: Selektionsfilter
- 22: Oszillator
- 23: Mischstufe
- 24: Bandpassfilter
- 25: AM/FM-Demodulator
- 26: Feldstärkedetektor
- 27: Qualitätsdetektor
- 28: Phasenregelkreis

## Patentansprüche

1. Empfangseinrichtung mit
- mindestens zwei Fernseh-Kanalwähleinrichtungen (6, 7, 8) zum Umsetzen von Hochfrequenzsignalen in Zwischenfrequenzsignale,
- mindestens zwei Video-Demodulationseinrichtungen (10, 11) zum Umsetzen von Zwischenfrequenz-Signalen in Bildsignale,
- mindestens zwei Audio-Demodulationseinrichtungen (12, 13) zum Umsetzen von Zwischenfrequenzsignalen in Tonsignale und
- einer Zwischenfrequenz-Schalteinrichtung (9) zum Aufschalten der Audio- und Video-Demodulationseinrichtungen (10, 11, 12, 13) auf die Fernseh-Kanalwähleinrichtungen (6, 7, 8).

2. Empfangseinrichtung nach Anspruch 1 mit zusätzlich mindestens zwei Empfangsantennen zur Bereitstellung von Hochfrequenzsignalen und einer Hochfrequenz-Schalteinrichtung zum Aufschalten der Empfangsantennen auf die Fernseh-Kanalwähleinrichtungen.

3. Empfangseinrichtung nach einem der vorherigen Ansprüche mit zusätzlich einer Video-Korrelationseinrichtung (14), die an die Ausgänge der Video-Demodulationseinrichtüngen (10, 11) angeschlossen ist.

4. Empfangseinrichtung nach einem der vorherigen Ansprüche mit zusätzlich einer Audio-Korrelationseinrichtung (17), die an die Ausgänge der Audio-Demodulationseinrichtungen (12, 13) angeschlossen ist.

5. Empfangseinrichtung nach einem der vorherigen Ansprüche mit zusätzlich einer Label-Korrelationseinrichtung (15), die an die Ausgänge der Video-Demodulationseinrichtungen (10, 11) angeschlossen ist.

6. Empfangseinrichtung nach einem der vorherigen Ansprüche, bei der mindestens eine Audio-Demodulationseinrichtung (12, 13) einen Phasenregelkreis (28) sowie mindestens ein mit dem Phasenregelkreis (28) mitlaufendes Filter (21) zur Selektion und Spiegelfrequenzunterdrückung aufweist.

7. Empfangseinrichtung nach Anspruch 6, bei der die Audio-Demodulationseinrichtung (12, 13) zusätzlich einen Feldstärkedetektor (26) aufweist.

8. Empfangseinrichtung nach Anspruch 6 oder 7, bei der die Audio-Demodulationseinrichtung (12, 13) zusätzlich einen Qualitätsdetektor (22) aufweist.

9. Empfangseinrichtung nach einem der vorherigen Ansprüche mit zusätzlich einer Auswerteeinrichtung (19) zur Auswertung von Ausgangssignalen der Audio-Korrelationseinrichtung (17) und/oder der Video-Korrelationseinrichtung (14) und/oder der Label-Korrelationseinrichtung (15) und/ oder des Feldstärkedetektors (26) und/oder des Qualitätsdetektors (27).

10. Empfangseinrichtung nach Anspruch 9, bei der die Auswerteeinrichtung (19) die Hochfrequenz-Schalteinrichtung (5) und/oder die Niederfrequenz-Schalteinrichtung (9) steuert.

11. Empfangseinrichtung nach Anspruch 9, bei der die Auswerteeinrichtung (19) die Hochfrequenz-Schalteinrichtung (5) und/oder die Niederfrequenz-Schalteinrichtung (9) gemäss einem wählbaren Betriebsmodus (20) in Abhängigkeit von den Ausgangssignalen der Audio-Korrelationseinrichtung (17) und/oder der Video-Korrelationseinrichtung (14) und/oder der Label-Korrelationseinrichtung (15) und/ oder des Feldstärkedetektors (26) und/oder des Qualitätsdetektors (27) steuert.

## Claims

1. A receiving device having
- at least two television channel selection devices (6, 7, 8) for converting high-frequency signals into intermediate-frequency signals,
- at least two video demodulation devices (10, 11) for converting intermediate-frequency signals into picture signals,
- at least two audio demodulation devices (12, 13) for converting intermediate-frequency signals into sound signals and
- an intermediate-frequency switching device (9) for switching the audio and video demodulation devices (10, 11, 12, 13) to the television channel selection devices (6, 7, 8).

2. A receiving device according to Claim 1, additionally having at least two receiver antennae for providing high-frequency signals and a high-frequency switching device for switching the receiver antenna to the television channel selection devices.

3. A receiving device according to one of the preceding Claims, additionally having a video correlation device (14), which is connected to the outputs of the video demodulation devices (10, 11).

4. A receiving device according to one of the preceding Claims, additionally having an audio correlation device (17), which is connected to the outputs of the audio demodulation devices (12, 13).

5. A receiving device according to one of the preceding Claims, additionally having a label correlation device (15), which is connected to the outputs of the video demodulation devices (10, 11).

6. A receiving device according to one of the preceding Claims, in which at least on audio demodulation device (12, 13) comprises a phase locked loop (28) and also at least one filter (21) following with the phase locked loop (29) for selection and image frequency suppression.

7. A receiving device according to Claim 6, in which the audio demodulation device (12, 13) additionally comprises a field strength detector (26).

8. A receiving device according to Claim 6 or 7, in which the audio demodulation device (12, 13) additionally comprises a quality detector (22).

9. A receiving device according to one of the preceding Claims, additionally having an evaluation device (19) for evaluating output signals of the audio correlation device (17) and/or of the video correlation device (14) and/or of the label correlation device (15) and/or of the field strength detector (26) and/or of the quality detector (27).

10. A receiving device according to Claim 9, in which the evaluation device (19) controls the high-frequency switching device (5) and/or the low-frequency switching device (9).

11. A receiving device according to Claim 9, in which the evaluation device (19) controls the high-frequency switching device (5) and/or the low-frequency switching device (9) in accordance with a selectable operation mode (20) as a function of the output signals of the audio correlation device (17) and/or of the video correlation device (14) and/or of the label correlation device (15) and/or of the field strength detector (26) and/or of the quality detector (27).

## Revendications

1. Dispositif de réception comportant
- au moins deux dispositifs de sélection de canal de télévision (6, 7, 8) pour la transposition de signaux hautes fréquences en signaux de fréquence intermédiaire,
- au moins deux dispositifs de démodulation vidéo (10, 11) pour transposer des signaux de fréquence intermédiaire en signaux image,
- au moins deux dispositifs de démodulation audio (12, 13) pour transposer des signaux de fréquence intermédiaire en signaux son et
- un dispositif de commutation de fréquence intermédiaire (9) pour raccorder les dispositifs de démodulation audio et vidéo (10, 11, 12, 13) aux dispositifs de sélection de canal de télévision (6, 7, 8).

2. Dispositif de réception selon la revendication 1,
comportant en plus au moins deux antennes de réception pour la mise à disposition de signaux haute fréquence et d'un dispositif de commutation haute fréquence pour le raccordement des antennes de réception aux dispositifs de sélection de canal de télévision.

3. Dispositif de réception selon l'une quelconque des revendications précédentes,
comportant en plus un dispositif de corrélation vidéo (14) qui est raccordé aux sorties des dispositifs de démodulation vidéo (10, 11).

4. Dispositif de réception selon l'une quelconque des revendications précédentes,
comportant en plus un dispositif de corrélation audio (17) qui est raccordé aux sorties des dispositifs de démodulation audio (12, 13).

5. Dispositif de réception selon l'une quelconque des revendications précédentes,
comportant en plus un dispositif de corrélation de dénomination (15) qui est raccordé aux sorties des dispositifs de démodulation vidéo (10, 11).

6. Dispositif de réception selon l'une quelconque des revendications précédentes,
dans lequel
au moins un dispositif de démodulation audio (12, 13) présente une boucle d'asservissement de phase (28) ainsi qu'au moins un filtre (21) accompagnant la boucle d'asservissement de phase (28) pour la sélection et la suppression de fréquences miroir.

7. Dispositif de réception selon la revendication 6,
dans lequel
le dispositif de démodulation audio (12, 13) présente en outre un détecteur de force de champ (26).

8. Dispositif de réception selon la revendication 6 ou 7,
dans lequel
le dispositif de démodulation audio (12, 13) présente en outre un détecteur de qualité (27).

9. Dispositif de réception selon l'une quelconque des revendications précédentes,
comportant en plus un dispositif d'exploitation (19) pour l'exploitation de signaux de sortie du dispositif de corrélation audio (17) et/ou du dispositif de corrélation vidéo (14) et/ou du dispositif de corrélation de dénomination (15) et/ou du détecteur de force de champ (26) et/ou du détecteur de qualité (27).

10. Dispositif de réception selon la revendication 9,
dans lequel
le dispositif d'exploitation (19) commande le dispositif de commutation haute fréquence (5) et/ou le dispositif de commutation basse fréquence (9).

11. Dispositif de réception selon la revendication 9,
dans lequel
le dispositif d'exploitation (19) commande le dispositif de commutation haute fréquence (5) et/ou le dispositif de commutation basse fréquence (9), selon un mode d'exploitation (20) pouvant être sélectionné en fonction des signaux de sortie du dispositif de corrélation audio (17) et/ou du dispositif de corrélation vidéo (14) et/ou du dispositif de corrélation de dénomination (15) et/ou du détecteur de force de champ (26) et/ou du détecteur de qualité (27).
